# EUROPÄISCHE PATENTANMELDUNG

(11) **EP 1 022 593 A1**
(43) Veröffentlichungstag der Anmeldung: **26.07.2000**
(21) Anmeldenummer: 00100512.3
(22) Anmeldetag: 12.01.2000
(51) Int. Cl.: G02B 6/25, G02B 6/245, G02B 6/38, G02B 6/42

(54) **Verfahren zur Konfektionierung eines Lichtleiters**

(30) Priorität: 22.01.1999 EP 99810048
(71) Anmelder: KOMAX HOLDING AG, 6036 Dierikon (CH)
(72) Erfinder: Meisser, Claudio, Dipl.El.-Ing. ETH, 6330 Cham (CH)
(74) Vertreter: Blöchle, Hans

(57) **Zusammenfassung**

Dieser Lichtleiter (1) besteht aus einer transparenten Faser (2) aus Kunststoff, einer Reflexionsschicht (3) und aus einem Mantel (4) aus Kunststoff. Der Lichtleiter (1) ist rotationssymmetrisch zu einer Faserachse (5). Für die optische Qualität einer Steckerverbindung von zwei Lichtleitern (1) ist die Beschaffenheit und die Lage der Stirnfläche (6) der Faser (2) von ausschlaggebender Bedeutung. Die Enden der Lichtleiter (1) müssen in einem minimalen Abstand zueinander angeordnet sein und die Faserachsen (5) genau aufeinander ausgerichtet sein. Üblicherweise ist das Ende des Lichtleiters (1) in einer Ferrule gefasst, dabei ist es wichtig, dass in einer Steckerverbindung die eine Stirnfläche (6) gegenüber der anderen Stirnfläche (6) genau positioniert ist. Das überstehende Faserende wird mittels Laserstrahl abgetrennt, wobei eine Stirnfläche (6) entsteht, die die erforderliche mechanische und optische Qualität aufweist.

## Beschreibung

Die Erfindung betrifft ein Verfahren zur Konfektionierung eines aus Faser und Mantel bestehenden Lichtleiters, der nach der Ablängung und Abmantelung mit mindestens einem Verbindungselement bestückt wird.

Licht eignet sich zur Übertragung von Information, wobei beispielsweise eine digitale Modulation des Lichtes entsprechend der zu übertragenden Information angewendet wird. Dabei werden elektrische Signale in optische Signale umgewandelt und die Information mittels elektronischen Bauteilen auf optische Bauteile und umgekehrt übertragen. In einem Sender erzeugt ein durch eine Leuchtdiode fliessender Strom Licht, wobei sich die erzeugte Lichtenergie je nach Diodenstrom ändert. Das Licht wird einem Empfänger zugeführt, der mittels einer Photodiode das Licht in einen Strom bei einer bestimmten Spannung umwandelt, wobei das sich ändernde Licht den Diodenstrom entsprechend verändert. Sender und Empfänger sind mittels eines Lichtleiters verbunden, der sicherstellen soll, dass das vom Sender erzeugte Licht mit möglichst kleinen Verlusten beim Empfänger ankommt. Nicht immer ist es möglich, den Sender nahtlos mit dem Empfänger zu verbinden. In bestimmten Anwendungsfällen muss der Lichtleiter auftrennbar sein. Dazu sind vergleichbar mit einer elektrischen Verbindung Stecker notwendig, mittels denen die Lichtleiterverbindung auftrennbar ist. Zur Sicherstellung einer guten Verbindung werden an die Ankopplung des Lichtleiter an den Sender/Empfänger bzw. an den Stecker bestimmte Anforderungen bezüglich Lichtverluste gestellt. Die Bearbeitung der Stirnflächen, die Oberflächenrauhigkeit der Stirnflächen, der Versatz von Leiterachsen, der Abstand der Stirnflächen und Reflexionen an den Stirnflächen des Lichtleiters haben einen direkten Einfluss auf die Lichtverluste zwischen Sender und Empfänger.

Lichtleiter werden ausser zur Informationsübertragung auch für Anwendungen verwendet, bei denen Licht geleitet werden muss wie beispielsweise zu Beleuchtungszwecken oder in optischen oder medizinischen Geräten oder in Verkehrsmitteln oder in Gebäuden usw..

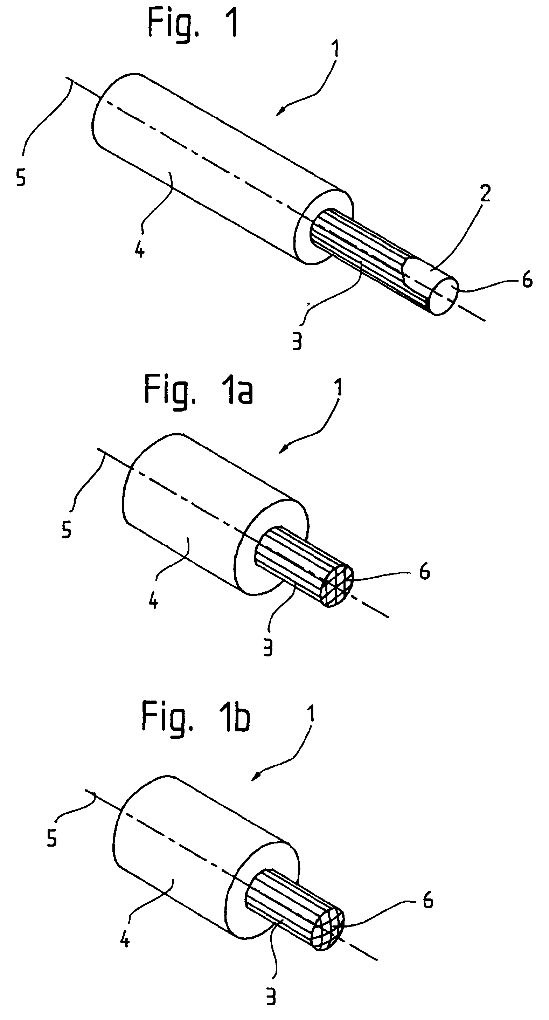

Fig. 1 zeigt einen Lichtleiter 1 bestehend aus einer transparenten Faser 2 beispielsweise aus Kunststoff, einer Reflexionsschicht 3, in der Fachsprache Cladding genannt, und aus einem Mantel 4 beispielsweise aus Kunststoff. Der Lichtleiter ist rotationssymmetrisch zu einer Faserachse 5. Andere Fasermaterialien beispielsweise auf Glasbasis sind auch möglich. Für die optische Qualität einer Steckerverbindung von zwei Lichtleitern 1 ist wie oben erwähnt die Beschaffenheit und die Lage der Stirnfläche 6 der Faser 2 von ausschlaggebender Bedeutung. Die Enden der Lichtleiter 1 müssen in einem minimalen Abstand zueinander angeordnet sein und die Faserachsen 5 genau aufeinander ausgerichtet sein. In vielen Ausführungsformen ist das Ende des Lichtleiters 1 in einem rohrförmigen Steckteil, auch Ferrule genannt, gefasst, das zwecks optischer Verbindung zweier Lichtleiter 1 in eine Zentrierhülse bzw. in ein Gehäuse gesteckt wird. Dabei ist es wichtig, dass die eine Stirnfläche 6 gegenüber der anderen Stirnfläche 6 genau positioniert ist. Dasselbe gilt für den Übergang vom Sender auf den Lichtleiter 1, bzw. vom Lichtleiter 1 auf den Empfänger.

Aus der Patentschrift DE 195 29 527 ist ein Verfahren zur Herstellung einer Ferrulenverbindung bekannt geworden, bei dem eine Lichtleiterfaser aus Kunststoff in eine Bohrung einer Ferrule gesteckt wird und darin festgehalten wird. Die Ferrule wird bis zur Aufquelltemperatur der Lichtleiterfaser erhitzt. Bei der Erhitzung auf Aufquelltemperatur vergrössert sich der Faserdurchmesser in nicht reversibler Weise, wobei sich die Lichtleiterfaser an die Innenwandung der Bohrung anschmiegt und einen zugfesten Sitz mit der Ferrule bildet. Die Bohrung der Ferrule ist einenends erweitert und dient der Endflächenbearbeitung der Lichtleiterfaser, wobei das Faserendstück mit einer Heizplatte angeschmolzen wird und in die Bohrungserweiterung gedrückt wird.

Ein Nachteil der bekannten Einrichtung liegt in der Bearbeitung der Endfläche der Lichtleiterfaser mittels der Heizplatte. Die Wärmebehandlung der Endfläche kann etwa 5 Sekunden dauern, was insbesondere bei der Serienfertigung von Lichtleitern hohe Herstellungskosten verursacht und zudem den gesamten Arbeitsablauf verlangsamt. Fig. 1a zeigt eine plane Stirnfläche 6 der Lichtleiterfaser 2, die bei der Anwendung der Wärmebehandlung mittels Heizplatte entsteht.

Hier will die Erfindung Abhilfe schaffen. Die Erfindung, wie sie in Anspruch 1 gekennzeichnet ist, löst die Aufgabe, die Nachteile der bekannten Einrichtung zu vermeiden und ein Verfahren anzugeben, mittels dem die automatische Konfektionierung von Lichtleitern mit optisch einwandfreien Eigenschaften wirtschaftlich interessant ist.

Die durch das erfindungsgemässe Verfahren erreichten Vorteile sind im wesentlichen darin zu sehen, dass die Konfektionierung, insbesondere die Bearbeitung der Stirnfläche des Lichtleiters innerhalb von weniger als einer Sekunde machbar ist. Weil die am meisten Zeit des Konfektionierungsvorganges in Anspruch nehmende Bearbeitung der Stirnfläche mit dem erfindungsgemässen Verfahren wesentlich verkürzt werden kann, können parallel zur Stirnflächenbearbeitung arbeitende Bearbeitungsautomaten besser ausgenutzt werden, da der am meisten Zeit benötigende Arbeitsschritt den Takt für das gesamte Bearbeitungszentrum bestimmt. Weiter vorteilhaft ist, dass trotz Serienfertigung eine einwandfreie mechanische und optische Qualität der Stirnfläche und somit eine optische Verbindung mit minimalen Dämpfungsverlusten erreichbar ist. Die Bearbeitung der Stirnfläche erfolgt berührungslos, wodurch zu Absorption und Streuungen des Lichtes führende Verunreinigungen oder Kratzer auf der Stirnfläche vermieden werden. Verluste durch schiefen Strahlaustritt werden durch die senkrecht auf der Faserachse stehende und leicht konvexe Stirnfläche weitgehend vermieden. Durch eine rauhe Oberfläche der Stirnfläche entstehende Streuverluste treten nicht auf, da die Rauhigkeit der Oberfläche kleiner ist als die Wellenlänge. Um zu verhindern, dass die Faser von der Ferrule vorsteht und beschädigt werden kann, kann mit dem erfindungsgemässen Verfahren die Faser entlang der stirnseitigen Ferrulenoberfläche geschnitten werden. Ausserdem wird durch den präzisen Schnitt entlang der Ferrule verhindert, dass sich die Faser zu weit in die Ferrule zurückziehen kann, zu grosse Abstände im Stecker und somit Übertragungsverluste wären die Folge davon. Mit dem erfindungsgemässen Verfahren treten nach der Behandlung der Faser keine Schrumpfungen am Faserende auf, die Faser zieht sich nicht in die Ferrule zurück. Weiter vorteilhaft ist, dass der Aufbau der Ferrule und der Bestückungsvorgang vereinfacht wird.

Im folgenden wird die Erfindung anhand von ein Ausführungsbeispiel darstellenden Zeichnungen näher erläutert.

Es zeigen:
- Fig. 1: einen Lichtleiter mit Mantel und einer Faser zur Lichtleitung,
- Fig. 1a: eine Lichtleiterfaser mit planer Stirnfläche,
- Fig. 1b: eine Lichtleiterfaser mit sphärischer Stirnfläche,
- Fig. 2 bis 7: ein erfindungsgemässes Verfahren zur Konfektionierung des Lichtleiters mit einer einteiligen Ferrule,

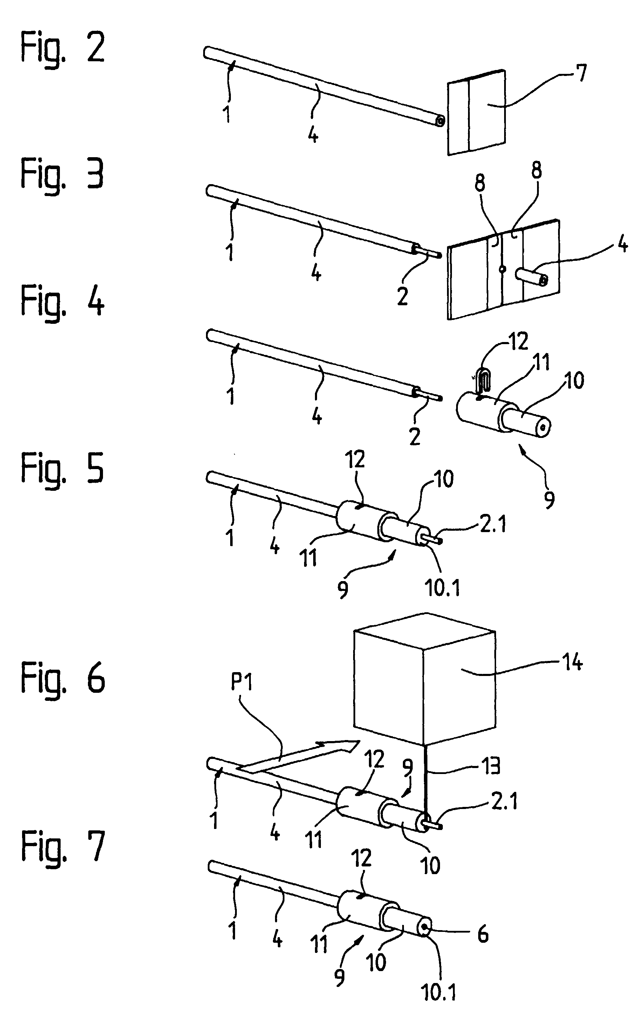

- Fig. 2: die Ablängung des Lichtleiters,
- Fig. 3: die Abmantelung des Lichtleiters,
- Fig. 4: die Positionierung einer einteiligen Ferrule,
- Fig. 5: die Einführung/Verbindung des Lichtleiters in/mit die/der Ferrule,
- Fig. 6: die Bearbeitung der Stirnfläche der Lichtleiterfaser,
- Fig. 7: den fertig konfektionierten Lichtleiter,

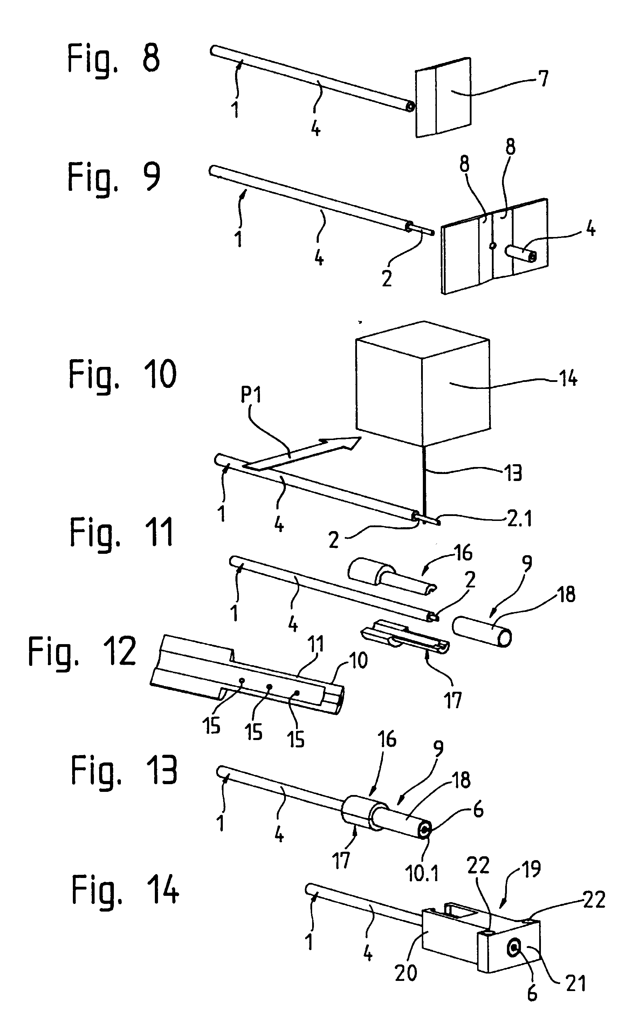

- Fig. 8 bis 14: ein erfindungsgemässes Verfahren zur Konfektionierung des Lichtleiters mit einer mehrteiligen Ferrule,
- Fig. 8: die Ablängung des Lichtleiters,
- Fig. 9: die Abmantelung des Lichtleiters,
- Fig. 10: die Bearbeitung der Stirnfläche der Lichtleiterfaser,
- Fig. 11: die Einführung/Verbindung des Lichtleiters in/mit die/der Ferrule,
- Fig. 12: Einzelheiten der mehrteiligen Ferrule,
- Fig. 13: den fertig konfektionierten Lichtleiter,
- Fig. 14: ein Gehäuse zur Aufnahme des fertig konfektionierten Lichtleiters,

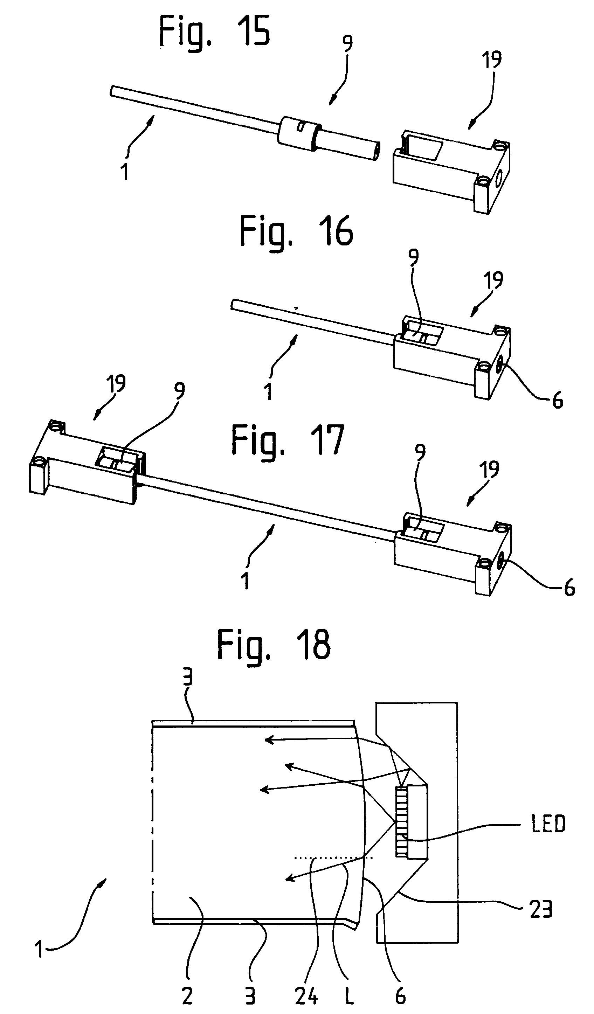

- Fig. 15: ein konfektioniertes Lichtleiterende und ein Gehäuse,
- Fig. 16: ein Lichtleiterende mit Gehäuse,
- Fig. 17: beide Lichtleiterenden mit Gehäuse und
- Fig. 18: eine schematische Darstellung einer Lichteinleitung in einen Lichtleiter.

In den Fig. 1 bis 18 ist mit 1 ein Lichtleiter 1 bezeichnet, der aus einer transparenten Faser 2 beispielsweise aus Kunststoff, einer Reflexionsschicht 3, in der Fachsprache Cladding genannt, und aus einem Mantel 4 beispielsweise aus Kunststoff besteht. Der Lichtleiter 1 ist rotationssymmetrisch zu einer Faserachse 5. Für die optische Qualität einer Steckerverbindung von zwei Lichtleitern 1 ist wie oben erwähnt die Beschaffenheit und die Lage der Stirnfläche 6 der Faser 2 von ausschlaggebender Bedeutung. Weitere Einzelheiten des Lichtleiters 1 sind oben erwähnt. Fig. 1b zeigt eine sphärische Stirnfläche 6 der Lichtleiterfaser 2, die bei der Anwendung des erfindungsgemässen Verfahrens entsteht.

Fig. 2 bis 7 zeigen das erfindungsgemässe Verfahren zur Konfektionierung eines Lichtleiters 1. Die Verfahrensschritte werden von beispielsweise parallel arbeitenden Automaten ausgeführt. In Fig. 2 wird der Lichtleiter 1 mittels eines Trennmessers 7 auf die gewünschte Länge geschnitten. Nach der Ablängung erfolgt wie in Fig. 3 gezeigt die Abmantelung, bei der Formmesser 8 den Mantel 4 einschneiden und diesen mit einer Bewegung in achsialer Richtung über das Lichtleiterende abziehen. Der Mantel 4 wird von den Formmessern 8 präzise eingeschnitten ohne die Reflexionsschicht 3 zu verletzen. Eine verletzte Reflexionsschicht 3 würde die optische Qualität der Verbindung beeinträchtigen. Nach der Abmantelung ist wie in Fig. 4 gezeigt eine als Verbindungselement dienende Ferrule 9 bezüglich der Faserachse 5 positioniert worden. Die Ferrule 9 besteht aus einem Faserteil 10 zur Aufnahme der Faser 2 mit der Reflexionsschicht 3 und aus einem Mantelteil 11 zur Aufnahme des Mantels 4, wobei eine Arretierung in der Form beispielsweise einer steckbaren Klammer 12 zwecks Zugentlastung der Faser 2 den Mantel 4 mit dem Mantelteil 11 mechanisch verbindet. Fig. 5 zeigt den in die Ferrule 9 eingeführten und mit der Ferrule 9 verbundenen Lichtleiter 1, wobei das Faserende 2.1 bezüglich einer Stirnseite 10.1 des Faserteils 10 überstehend ist. In Fig. 6 wird das überstehende Faserende 2.1 mittels eines Laserstrahls 13 beispielsweise eines CO₂ Lasergerätes 14 abgetrennt bzw. die Faser 2 mit der Reflexionsschicht 3 präzise auf die ebene Stirnseite der Ferrule abgelängt, indem beispielsweise der Lichtleiter 1 in Pfeilrichtung P1 durch den Laserstrahl 13 bewegt wird. Die entstehende Stirnfläche 6 der Faser 2 weist die erforderliche mechanische und optische Qualität auf. Die mit dem Laserstrahl 13 mechanisch berührungslos erzeugte Stirnfläche 6 in beispielsweise etwa einer Sekunde ist sauber und wie in Fig. 1b und Fig. 18 gezeigt leicht konvex, bzw. leicht sphärisch, was sich in Sachen Lichtverluste positiv auswirkt. Fig. 7 zeigt das fertig konfektionierte Ende des Lichtleiters 1.

Fig. 8 bis 14 zeigen das erfindungsgemässe Verfahren zur Konfektionierung eines Lichtleiters 1 mit einer mehrteiligen Ferrule 9. In Fig. 8 wird der Lichtleiter 1 mittels eines Trennmessers 7 auf die gewünschte Länge geschnitten. Fig. 9 zeigt die Abmantelung, bei der Formmesser 8 den Mantel 4 einschneiden und diesen mit einer Bewegung in achsialer Richtung über das Lichtleiterende abziehen. Der Mantel 4 wird von den Formmessern 8 präzise eingeschnitten ohne die Reflexionsschicht 3 zu verletzen. Eine verletzte Reflexionsschicht 3 würde die optische Qualität der Verbindung beeinträchtigen. In Fig. 10 wird das Faserende 2.1 mittels eines Laserstrahls 13 beispielsweise eines CO₂ Lasergerätes 14 abgetrennt, bzw. die Faser 2 mit der Reflexionsschicht 3 präzise abgelängt, indem beispielsweise der Lichtleiter 1 in Pfeilrichtung P1 durch den Laserstrahl 13 bewegt wird. Die entstehende Stirnfläche 6 der Faser 2 weist die erforderliche mechanische und optische Qualität auf. Die mit dem Laserstrahl 13 mechanisch berührungslos erzeugte Stirnfläche 6 in beispielsweise etwa einer Sekunde ist sauber und wie in Fig. 1b und Fig. 18 gezeigt leicht konvex bzw. sphärisch, was sich in Sachen Lichteinleitung oder Lichtverluste positiv auswirkt. Nach der Ablängung der Lichtleiterfaser 2 ist wie in Fig. 11 gezeigt eine mehrteilige Ferrule 9 bezüglich der Faserachse 5 positioniert worden. Die Ferrule 9 besteht aus einem Faserteil 10 zur Aufnahme der Faser 2 mit der Reflexionsschicht 3 und aus einem Mantelteil 11 zur Aufnahme des Mantels 4, wobei eine obere Halbschale 16, eine untere Halbschale 17 und eine aufschiebbare Hülse 18 vorgesehen ist. Jede Halbschale 16,17 weist eine Arretierung in der Form von in den Mantel 4 eindringenden Dornen 15 (Fig. 12) zwecks Zugentlastung der Faser 2 auf. Das Ende des Lichtleiters 1 wird in die eine Halbschale 16,17 eingelegt, die andere Halbschale 16,17 aufgelegt und die Hülse 18 über die beiden Halbschalen geschoben. Die Stirnfläche 6 der Faser 2 ist wie in Fig. 13 gezeigt genau bündig mit der ebenen durch die Halbschalen 16,17 und die Hülse 18 gebildete Stirnseite 10.1 der Ferrule 9. Auf keinen Fall darf die Stirnfläche 6 der Faser 2 von der Stirnseite 10.1 der Ferrule 9 vorstehen. Fig. 14 zeigt ein aus einem Ferrulenteil 20 und einem Befestigungsteil 21 bestehenden Gehäuse 19 zur Aufnahme und Halterung der Ferrule 9. Am Befestigungsteil 21 sind Bohrungen 22 für Schrauben zur Befestigung an einer Unterlage angeordnet. Die Ferrule 9 wird in das Gehäuse 19 eingelegt, wobei die Stirnfläche 6 der Faser 2 bündig mit der Stirnseite des Befestigungsteils 21 ist. Die Ferrule 9 kann im Gehäuse 19 eingegossen sein.

Fig. 15 bis Fig. 17 zeigen den Bestückungsvorgang eines Gehäuses 19 mit einer einteiligen Ferrule 9 und einen an beiden Enden bestückter Lichtleiter 1.

Fig. 18 zeigt die Lichteinleitung in einen Lichtleiter 1 mit leicht sphärischer Stirnfläche 6. Das Licht L eines Senders LED gelangt direkt in die Faser 2 oder wird an einem Reflektor 23 abgelenkt und gelangt dann in die Faser 2, wobei beim Lichteintritt an der sphärischen Stirnfläche 6 der Faser 2 eine Brechung zum Lot 24 hin erfolgt.

## Patentansprüche

1. Verfahren zur Konfektionierung eines aus Faser (2) und Mantel (4) bestehenden Lichtleiters (1), der nach der Ablängung und Abmantelung mit mindestens einem Verbindungselement (9) bestückt wird,
dadurch gekennzeichnet,
dass die Faser (2) mittels Laserstrahl (13) abgelängt und/oder an der Stirnfläche (6) behandelt wird.

2. Verfahren nach Anspruch 1,
dadurch gekennzeichnet,
dass die Stirnfläche (6) der Faser (2) nach der Laserstrahlbehandlung leicht sphärisch ist.

3. Verfahren nach Anspruch 2,
dadurch gekennzeichnet,
dass ein Laserstrahl (13) eines CO₂ Lasergerätes (14) verwendet wird.

4. Verfahren nach den Ansprüchen 1 bis 3,
dadurch gekennzeichnet,
dass der Lichtleiter (1) mit einem als Ferrule (9) ausgebildeten Verbindungselement vor der Laserstrahlbehandlung bestückt wird.

5. Verfahren nach den Ansprüchen 1 bis 3,
dadurch gekennzeichnet,
dass der Lichtleiter (1) mit einem als Ferrule (9) ausgebildeten Verbindungselement nach der Laserstrahlbehandlung bestückt wird.

6. Verfahren nach Anspruch 4,
dadurch gekennzeichnet,
dass der Lichtleiter (1) mit einer einteiligen Ferrule (9) mit ebener Stirnseite (10.1) bestückt wird.

7. Verfahren nach Anspruch 5,
dadurch gekennzeichnet,
dass der Lichtleiter (1) mit einer mehrteiligen Ferrule (9) bestückt wird.

8. Verfahren nach Anspruch 7,
dadurch gekennzeichnet,
dass das Ende des Lichtleiters (1) nach der Laserstrahlbehandlung in eine Halbschale (16) eingelegt, eine weitere Halbschale (17) aufgelegt und eine Hülse (18) über die beiden Halbschalen (16,17) geschoben wird, wobei die Halbschalen (16,17) und die Hülse (18) eine ebene Stirnseite (10.1) der Ferrule (9) bilden.
